# FASCICULE DE BREVET EUROPEEN

(11) **EP 1 090 574 B1**
(45) Date de publication et mention de la délivrance du brevet: **24.11.2004**
(21) Numéro de dépôt: 99117107.5
(22) Date de dépôt: 31.08.1999
(51) Int. Cl.: A47J 31/40, A47J 31/06

(54) **Dispositif pour l'extraction d'une substance pour la preparation d'une boisson**
Vorrichtung zum Extrahieren einer Substanz für die Zubereitung eines Getränkes
Device for extracting a substance for preparing a beverage

(43) Date de publication de la demande: 11.04.2001
(73) Titulaire: SOCIETE DES PRODUITS NESTLE S.A., 1800 Vevey (CH)
(72) Inventeur: Kollep, Alex, 8590 Romanshorn (CH); Fischer, Daniel, 8590 Romanshorn (CH); Stieger, Mischa, 9000 St.Gallen (CH)
(74) Mandataire: Borne, Patrice Daniel

(56) Documents cités:
- WO-A-94/02059
- US-A- 3 260 190
- US-A- 3 353 474
- US-A- 3 470 812
- US-A- 5 794 519

## Description

La présente invention concerne un dispositif pour l'extraction d'une substance pour la préparation d'une boisson, tel qu'on connait par le document US 3 353 474.

On connait déjà un dispositif pour l'extraction de sachets souples fermés contenant au moins une substance pour la préparation d'une boisson. Le brevet WO 94/02059 au nom du demandeur concerne un tel dispositif comprenant une pièce supérieure munie des moyens destinées à perforer la face supérieure du sachet, une pièce inférieure présentant des éléments en relief et en creux constituant la zone d'écoulement et des moyens de fixation rendant solidaires lesdites pièces supérieure et inférieure. Le problème avec ce dispositif est que la pièce inférieure et supérieure ne sont pas liées ensemble, ce qui peut provoquer le problème suivant : on descend la partie mobile sur la partie fixe, mais on la descend insuffisamment bas, ce qui peut conduite à ce que les moyens de fixation ne verrouillent pas l'ensemble partie supérieure-partie inférieure. Ce qui conduirait à une impossibilité d'extraction des sachets.

Le but de la présente invention est de mettre au point un dispositif d'extraction de substance pour la préparation d'une boisson, dans lequel il n'y a plus aucun risque de défaut de verrouillage entre les pièces supérieure et inférieure, de manière à garantir avec certitude une extraction avec une bonne étanchéité de la substance à extraire.

La présente invention concerne un dispositif pour l'extraction d'une substance pour la préparation d'une boisson, comprenant
- une première pièce fixe et
- une seconde pièce mobile par rapport à la première selon un axe de rotation disposé à l'arrière desdites deux pièces, l'avant de chaque pièce ménageant un logement pour la substance à extraire,
- ledit dispositif comprenant en outre un système de fermeture et d'ouverture des deux pièces, ledit système comportant un levier de fermeture à deux branches et deux biellettes de traction, les deux branches du levier de fermeture sont fixées à rotation selon un premier axe de part et d'autre de la seconde pièce, les biellettes de traction sont fixées à rotation selon un second axe de part et d'autre de la première pièce, les extrémités des deux branches du levier de fermeture et des biellettes de traction sont solidaires selon un troisième axe mobile, de manière à coopérer entre-elles pour assurer la fermeture et l'ouverture du dispositif.

L'intérêt du dispositif selon l'invention est que la première et la seconde pièce sont solidaires tout le temps, ce qui signifie que lorsqu'on actionne le système d'ouverture et de fermeture, la seconde pièce mobile est amenée progressivement vers la première pièce fixe jusqu'au verrouillage complet des deux pièces l'une par rapport à l'autre. Il ne peut pas y avoir de défaut de verrouillage, et donc de défaut d'étanchéité lors de l'extraction.

Il est prévu un logement pour pour la substance à extraire. Ce logement peut être prévu pour y placer une cartouche fermée, par exemple une cartouche telle que décrite dans les brevets EP 512'468 et EP 602'203 au nom du demandeur. Il n'y a cependant aucune limitation à pouvoir également utiliser le dispositif selon l'invention pour d'autres sachets, capsules ou cartouches fermés. Il est également possible d'utiliser le dispositif selon l'invention pour des cartouches ouvertes, par exemple des cartouches en matière plastique ou des sachets en papier filtre, en non-tissés.

La substance contenue dans la cartouche fermée, ouverte, ou autre est une substance pulvérulente pour la préparation d'une boisson. Cette substance est de préférence du café torréfié et moulu, mais peut aussi être du thé, du café soluble, , un mélange de café moulu et de café soluble, un produit chocolaté ou toute autre substance comestible deshydratée.

La description du fonctionnement du dispositif selon l'invention sera explicitée plus en détail en référence aux figures. On peut cependant déjà dire qu'on opère de la manière suivante :
- la cartouche est disposée dans son logement dans la première pièce, qui est fixe,
- le consommateur manipule ensuite le système de fermeture : il tire vers lui le levier de fermeture, ce qui redresse les biellettes de traction et abaisse le seconde pièce mobile vers la première pièce. En fin de course du levier de fermeture, les deux pièces sont en position de fermeture. A ce moment là, le premier, le second et le troisième axe sont sensiblement dans un même plan vertical à l'arrière du logement pour la substance à extraire.

Dans une forme de réalisation préférentielle du dispositif selon l'invention, en position de fermeture des deux pièces, le troisième axe reliant les deux branches de levier de fermeture et les biellettes de traction est sensiblement en avant du plan formé par les deux autres axes. Cette configuration permet de garantir de manière totalement certaine un bon blocage et une parfaite étanchéité du dispositif selon l'invention. Par en avant du plan formé par les deux autres axes, on entend se rapprochant du logement pour la substance à extraire.

Il y a également un risque de défaut d'étanchéité lorsqu'on ferme le dispositif selon l'invention, car la partie inférieure du logement dans la seconde pièce n'est pas toujours exactement parallèle à la contre-pièce de la première pièce fixe. Pour pallier à ce risque, il est prévu que la seconde pièce mobile comprend un logement pour la substance à extraire qui est mobile sur une rotule sphérique. Dans ce mode de réalisation, le centre de la rotule sphérique est sensiblement au centre du plan où se fait l'étanchéité du logement de la substance à extraire. On peut ainsi rattraper tout défaut de parallélisme et annuler tout risque d'inétanchéité.

Si le dispositif selon l'invention est utilisé pour extraire des cartouches fermées, il faut disposer dans la seconde pièce mobile d'une aiguille permettant l'arrivée d'eau et dans la première pièce fixe d'une plaquette avec des éléments en creux et en relief, comme ceux mentionnés dans les brevets EP 512'470 et EP 604'615 au nom du demandeur.

La suite de la description est faite en référence aux dessins sur lesquels
Fig. 1 est une vue de côté du dispositif selon l'invention en position ouverte,
Fig. 2 est une vue de côté du dispositif selon l'invention en voie de fermeture,
Fig. 3 est une vue de côté du dispositf selon l'invention en voie de fermeture et
Fig. 4 est une vue de côté du dispositf selon l'invention en position de fermeture,
Fig. 5, 6, 7 et 8 sont des représentations en perspective des étapes de fermeture des Fig. 1,2,3 et 4,
Fig. 9 et 10 sont des coupes partielles montrant plus précisément la rotule sphérique.

Le dispositif comprend :
- une première pièce fixe (1),
- une seconde pièce (2) mobile par rapport à la première selon un axe de rotation (3) disposé à l'arrière desdites deux pièces, l'avant de chaque pièce (1,2) ménageant un logement (4) et (5) respectivement pour la substance à extraire,
- ledit dispositif comprenant en outre un système de fermeture et d'ouverture des deux pièces, ledit système comprenant un levier de fermeture (6) à deux branches et deux biellettes de traction (7).
Le levier de fermeture (6) comprend la partie de préhension (8) et la partie levier à proprement parler qui présente un coude à pratiquement 90°. La biellette de traction peut être droite ou comme sur la figure avec des extrémités incurvées. Le logement (4) comprend une bordure périphérique (9) et le logement (5) une bordure périphérique (10).
Les deux branches du levier de fermeture (6) sont fixées à rotation selon un premier axe (11) de part et d'autre de la seconde pièce (2) et les biellettes de traction (7) sont fixées à rotation selon un second axe (12) de part et d'autre de la première pièce (1). Les deux extrémités des deux branches du levier de fermeture, opposées à la partie de préhension (8) et les deux extrémités des biellettes de traction (7) sont solidaires selon un troisième axe mobile (13), de manière à ce que le levier de fermeture coopère avec les biellettes pour assurer la fermeture et l'ouverture du dispositif selon l'invention.

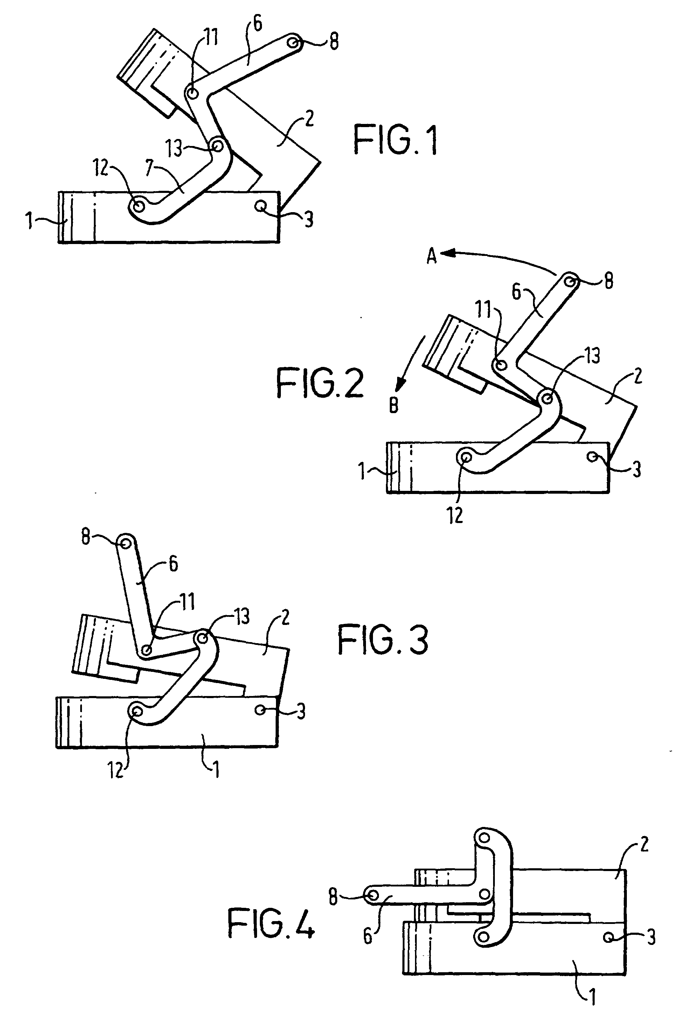

En reprenant les séquences des figures 1 à 4 et 5 à 8, le fonctionnement du dispositif selon l'invention est le suivant :

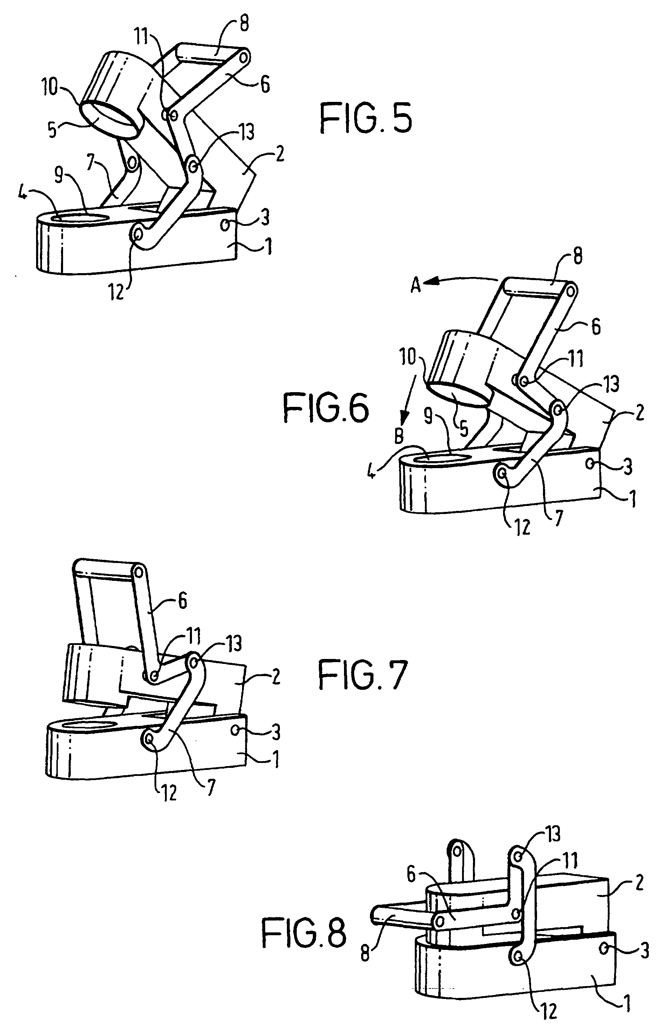

Le consommateur dispose dans le logement (4) une capsule ou une cartouche à extraire (non représentée): Fig. 1 et 5. Il tire ensuite vers l'avant dans le sens de la flèche A la partie de préhension (8) du levier de fermeture (6), de manière à faire tourner ledit levier autour de son axe (11), ce qui entraine alors la biellette de traction (7) le long de l'axe (13) vers le haut et fait descendre la partie mobile (2) (flèche B) vers la partie fixe (1) : Figures 2,3 et 6,7. On arrive en position de fermeture lorsque le levier de fermeture est sensiblement en position horizontale et les biellettes de traction en position verticale : Figures 4 et 8. A ce moment là, les rebords périphériques (9,10) des logements (4,5) sont face à face et doivent garantir une bonne étanchéité du dispositif.

Le dispositif selon l'invention est intégré dans une machine à café comprenant des éléments classiques, à savoir un réservoir pour l'eau, un corps de chauffe, une pompe pour amener l'eau au logement (5) et des canaux d'arrivée d'eau. Ces différents éléments n'ont pas été représentés sur les figures. Lorsque le dispositif est en position de totale fermeture (Fig. 4 et 8), on peut activer la pompe pour amener l'eau dans les logements (4,5) : l'eau coule alors sur la substance à extraire, par exemple du café et la boisson coule sous la pièce (1) dans une tasse (non représentée)

A la fin de l'extraction, le consommateur déverrouille le dispositif en levant le levier de fermeture (6) vers le haut, ce qui fait basculer la biellette de traction (7) suivant son axe de rotation (12) vers l'arrière et ce qui soulève la partie mobile (2). Le consommateur peut ainsi enlever la cartouche extraite et le dispositf est ainsi prêt pour une nouvelle extraction.

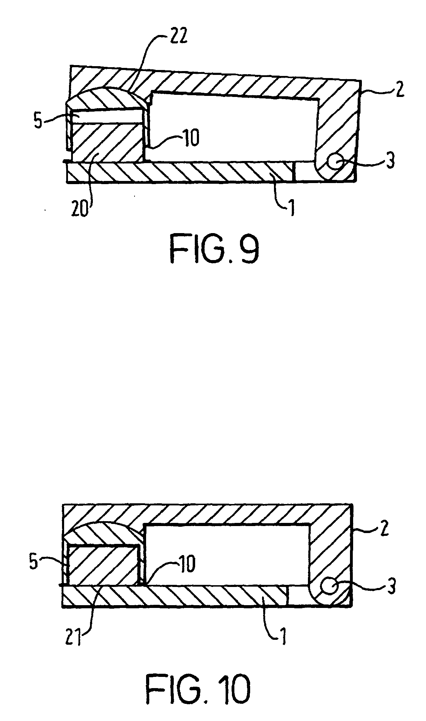

Les figures 9 et 10 montrent une forme de réalisation spécifique du dispositif selon l'invention sous forme de coupe schématique. On n'a pas représenté sur la partie fixe (1) le logement, car c'est surtout sur la partie mobile (2) que porte la caractéristique. Cette partie (2) présente un logement (5) avec une bordure périphérique inférieure (10). La capsule à extraire est représentée en (20). Le logement (5) est mobile sur une rotule sphérique (22), dont le centre (21) est sensiblement au centre des deux logements (4,5). Lorsqu'on ferme la pièce (2), le logement (5) peut bouger selon les contours de la capsule (20) et la bordure (10) s'adapte pour bien appuyer contre la bordure (9) du logement (4).

## Revendications

1. Dispositif pour l'extraction d'une substance pour la préparation d'une boisson, comprenant
- une première pièce fixe (1) et
- une seconde pièce (2) mobile par rapport à la première selon un axe de rotation (3) disposé à l'arrière desdites deux pièces, l'avant de chaque pièce (1,2) ménageant un logement (4,5) pour la substance à extraire,
- ledit dispositif comprenant en outre un système de fermeture et d'ouverture des deux pièces, ledit système comportant un levier de fermeture (6) à deux branches et deux biellettes de traction (7), les deux branches du levier de fermeture sont fixées à rotation selon un premier axe (11) de part et d'autre de la seconde pièce (2), les biellettes de traction sont fixées à rotation selon un second axe (12) de part et d'autre de la première pièce (1), les extrémités des deux branches du levier de fermeture et des biellettes de traction sont solidaires selon un troisième axe mobile (13), de manière à coopérer entre-elles pour assurer la fermeture et l'ouverture du dispositif.

2. Dispositif selon la revendication 1, **caractérisé en ce que** le logement (4, 5) pour la substance à extraire est un logement pour une cartouche fermée, pour une cartouche ouverte et pour tout autre conditionnement de la substance à extraire.

3. Dispositif selon l'une des revendications 1 ou 2, **caractérisé en ce que** en position de fermeture des deux pièces, le premier (11), le second (12) et le troisième axe (13) sont sensiblement dans un même plan vertical à l'arrière du logement (4,5) pour la substance à extraire.

4. Dispositif selon la revendication 3, **caractérisé en ce que** en position de fermeture des deux pièces, le troisième axe (13) reliant les deux branches de levier (6) de fermeture et les biellettes de traction (7) est sensiblement en avant du plan formé par les deux autres axes (11, 12).

5. Dispositif selon l'une des revendications 1 à 4, **caractérisé en ce que** la seconde pièce (2) comprend un logement (5) pour la substance à extraire qui est mobile sur une rotule sphérique (22).

6. Dispositif selon la revendication 5, **caractérisé en ce que** le centre (21) de la rotule sphérique (22) est sensiblement au centre du plan où se fait l'étanchéité du logement de la substance à extraire.

## Claims

1. Device for extracting a substance for the preparation of a beverage, said device comprising
- a fixed first piece (1) and
- a second piece (2) which is movable in relation to the first in accordance with an axis of rotation (3) disposed at the rear of the said two pieces, the front of each piece (1, 2) providing a housing (4, 5) for the substance to be extracted,
- the said device also comprising a system for closing and opening the two pieces, the said system having a closing lever (6) with two arms and two traction links (7), the two arms of the closing lever are fixed for rotation in accordance with a first axis (11) on either side of the second piece (2), the traction links (7) are fixed for rotation in accordance with a second axis (12) on either side of the first piece (1), the ends of the two arms of the closing lever and of the traction links are interlinked in accordance with a third movable axis (13) in such a way as to interact with one another in order to carry out the closing and opening of the device.

2. Device according to claim 1, **characterised in that** the housing (4, 5) for the substance to be extracted is a housing for a closed pack, an open pack and any other packaging for the substance to be extracted.

3. Device according to one of claims 1 or 2, **characterised in that**, when the two pieces are in the closing position, the first (11), second (12) and third (13) axes are substantially in the same vertical plane at the rear of the housing (4, 5) for the substance to be extracted.

4. Device according to claim 3, **characterised in that**, when the two pieces are in the closing position, the third axis (13) connecting the two closing lever arms (6) and the traction links (7) is substantially in front of the plane formed by the other two axes (11, 12).

5. Device according to one of claims 1 to 4, **characterised in that** the second piece (2) comprises a housing (5) for the substance to be extracted which is movable on a spherical ball-and-socket joint (22).

6. Device according to claim 5, **characterised in that** the centre (21) of the spherical ball-and-socket joint (22) is substantially in the centre of the plane in which the sealing of the housing for the substance to be extracted is effected.

## Patentansprüche

1. Vorrichtung zum Extrahieren einer Substanz für die Zubereitung eines Getränks, umfassend
- ein erstes feststehendes Teil (1) und
- ein zweites Teil (2), das bezüglich des ersten um eine im hinteren Teil dieser beiden Teile angeordnete Drehachse (3) beweglich ist, wobei der vordere Teil jedes Teils (1, 2) eine Aufnahme (4, 5) für die zu extrahierende Substanz bildet,
- wobei die Vorrichtung außerdem ein System zum Schließen und Öffnen der beiden Teile aufweist, das einen Schließhebel (6) mit zwei Schenkeln und zwei Zugstangen (7) aufweist, wobei die beiden Schenkel des Schließhebels zu beiden Seiten des zweiten Teils (2) an einer ersten Achse (11) drehbar befestigt sind, die Zugstangen zu beiden Seiten des ersten Teils (1) an einer zweiten Achse (12) drehbar befestigt sind und die Enden der beiden Schenkel des Schließhebels und der Zugstangen über eine dritte bewegliche Achse (13) miteinander so verbunden sind, daß sie zur Durchführung der Schließung und der Öffnung der Vorrichtung miteinander zusammenwirken.

2. Vorrichtung nach Anspruch 1, **dadurch gekennzeichnet, daß** die Aufnahme (4, 5) für die zu extrahierende Substanz eine Aufnahme für eine geschlossene Portionspackung, für eine offene Portionspackung und für jede andere Verpackung der zu extrahierenden Substanz ist.

3. Vorrichtung nach einem der Ansprüche 1 oder 2, **dadurch gekennzeichnet, daß** die erste (11), die zweite (12) und die dritte Achse (13) in der Schließstellung der beiden Teile im wesentlichen in einer gemeinsamen vertikalen Ebene hinter der Aufnahme (4, 5) für die zu extrahierende Substanz liegen.

4. Vorrichtung nach Anspruch 3, **dadurch gekennzeichnet, daß** die dritte Achse (13), die die beiden Schließhebelschenkel (16) und die Zugstangen (7) verbindet, sich in der Schließstellung im wesentlichen vor der durch die beiden anderen Achsen (11, 12) definierten Ebene befindet.

5. Vorrichtung nach einem der Ansprüche 1 bis 4, **dadurch gekennzeichnet, daß** das zweite Teil (2) eine Aufnahme (5) für die zu extrahierende Substanz aufweist, die auf einem sphärischen Gelenkkopf (22) beweglich ist.

6. Vorrichtung nach Anspruch 5, **dadurch gekennzeichnet, daß** der Mittelpunkt (21) des sphärischen Gelenkkopfs im wesentlichen in der Mitte der Ebene liegt, in der die Abdichtung der Aufnahme für die zu extrahierende Substanz stattfindet.
